# EUROPEAN PATENT SPECIFICATION

(11) **EP 3 048 376 B1**
(45) Date of publication and mention of the grant of the patent: **23.08.2017**
(21) Application number: 16150587.0
(22) Date of filing: 08.01.2016
(51) Int. Cl.: F24F 1/08, F25B 13/00, F25B 27/02, F24F 12/00

(54) **AIR CONDITIONER**
KLIMAANLAGE
CLIMATISEUR

(30) Priority: 12.01.2015 KR 20150004223
(43) Date of publication of application: 27.07.2016
(73) Proprietor: LG Electronics Inc., Seoul 07336 (KR)
(72) Inventor: SHIN, Kwangho, 08592 Seoul (KR); JEONG, Hojong, 08592 Seoul (KR); CHUNG, Minho, 08592 Seoul (KR); CHOI, Song, 08592 Seoul (KR)
(74) Representative: Vossius & Partner Patentanwälte Rechtsanwälte mbB

(56) References cited:
- EP-A2- 1 202 005
- EP-A2- 1 628 094
- EP-A2- 1 882 891
- WO-A1-2014/065548
- JP-A- 2012 007 868

## Description

An air conditioner is disclosed herein.

An air conditioner is an apparatus which cools or warms an interior, or purifies indoor air to provide a comfortable indoor environment to a user. The air conditioner may be classified into an electric heat pump (EHP) type using electric power, and a gas heat pump (GHP) type using a gas fuel such as LPG or LNG according to a power source for driving a compressor. Here, in the GHP type, an engine is operated by burning the gas fuel, and thus the compressor is driven.

A conventional EHP type air conditioner is disclosed in Korean Patent Application No.10-2003-0077857. In the EHP type air conditioner disclosed in the publication of unexamined patent applications, the compressor is easily controlled by adjusting a supply current, and thus it is appropriate to respond to a partial load, and high energy efficiency may be obtained. However, the EHP type air conditioner has a problem that frost is generated at an outdoor heat exchanger when a low temperature warming operation is performed.

And a conventional GHP type air conditioner is disclosed in Korean Patent Application No.10-2003-0077857. The GHP type air conditioner disclosed in the publication of unexamined patent applications has an advantage that defrost performance is excellent by using waste heat of an engine, but also has a problem that efficiency of the engine is low due to heat loss or the like. Patent document WO-A-2014/065548 discloses another GHP type air conditioner according to the preamble of claim 1.

Therefore, in an air conditioner market, a method for providing an air conditioner having further improved performance and efficiency is required.

The present invention is directed to an air conditioner which is able to further improve performance and efficiency. The air conditioner according to the present invention is defined in independent claim 1; the dependent claims describe embodiments of the invention.

According to an aspect of the present invention, there is provided an air conditioner including at least one indoor unit; an EHP outdoor unit connected with the at least one indoor unit, and having a first compressor driven using electric power and a first outdoor heat exchanger; and a GHP outdoor unit connected with the at least one indoor unit, and having an engine which drives a second compressor through a combustion gas and a second outdoor heat exchanger, wherein the GHP outdoor unit includes an exhaust gas heat exchanger which performs heat-exchanging between refrigerant flowing through the EHP outdoor unit and exhaust gas of the engine.

The air conditioner may further include a circulation pipe which extends from the EHP outdoor unit to the exhaust gas heat exchanger and supplies the refrigerant in the EHP outdoor unit to the exhaust gas heat exchanger.

The EHP outdoor unit may further include a first connection pipe which connects the indoor unit with the first outdoor heat exchanger, and a suction pipe which suctions and guides the refrigerant to the first compressor.

The circulation pipe may include a first end which is coupled to the first connection pipe, and a second end which is coupled to the suction pipe.

The circulation pipe may include a first circulation pipe which is branched from the first connection pipe and extends to the exhaust gas heat exchanger, and a second circulation pipe which extends from the exhaust gas heat exchanger and is joined to a second connection pipe.

The circulation pipe may further include a third circulation pipe which is connected to the first circulation pipe and the second circulation pipe and disposed inside the exhaust gas heat exchanger.

The EHP outdoor unit may further include a first accumulator which is installed at a suction side of the first compressor and supplies the refrigerant to the first compressor, and when the air conditioner performs a warming operation, the refrigerant condensed in the indoor unit may be introduced into the first outdoor heat exchanger via the first connection pipe, and the refrigerant evaporated in the first outdoor heat exchanger may be introduced into the first accumulator via the suction pipe.

The GHP outdoor unit may further include a second accumulator which is installed at a suction side of the second compressor and supplies the refrigerant to the second compressor, and the refrigerant evaporated in the second outdoor heat exchanger may be introduced into the second accumulator.

The air conditioner may further include a circulation control valve which is installed at the first circulation pipe or the second circulation pipe to control a flow rate of the refrigerant supplied toward the exhaust gas heat exchanger.

The circulation control valve may include an electronic expansion valve (EEV).

The EHP outdoor unit may further include a first connection valve which connects a discharge side pipe of the first compressor with a first pipe of the indoor unit, and a second connection valve which connects the first connection pipe with a second pipe of the indoor unit.

The GHP outdoor unit may further include an exhaust gas heat exchanger pipe which connects the engine with the exhaust gas heat exchanger and guides an exhaust gas generated from the engine to the exhaust gas heat exchanger.

The GHP outdoor unit may further include a cooling water heat exchanger which is provided at one side of the engine to absorb heat of the engine using cooling water, and a cooling water pipe which is connected with the cooling water heat exchanger and guides a flow of the cooling water for cooling the engine.

The exhaust gas heat exchanger pipe may extend from the engine to the exhaust gas heat exchanger via the cooling water heat exchanger.

The air conditioner may further include a cooling water pump which is installed at the cooling water pipe and generates a flowing force of the cooling water, and a radiator which is installed at one side of the first outdoor heat exchanger to exchange heat with external air and to cool the cooling water.

### BRIEF DESCRIPTION OF THE DRAWINGS

Embodiments will be described in detail with reference to the following drawings in which like reference numerals refer to like elements, and wherein:
Fig. 1 is a system view of an air conditioner according to one embodiment of the present invention; and
Fig. 2 is a view illustrating an operation of the air conditioner of FIG. 1.

### DETAILED DESCRIPTION

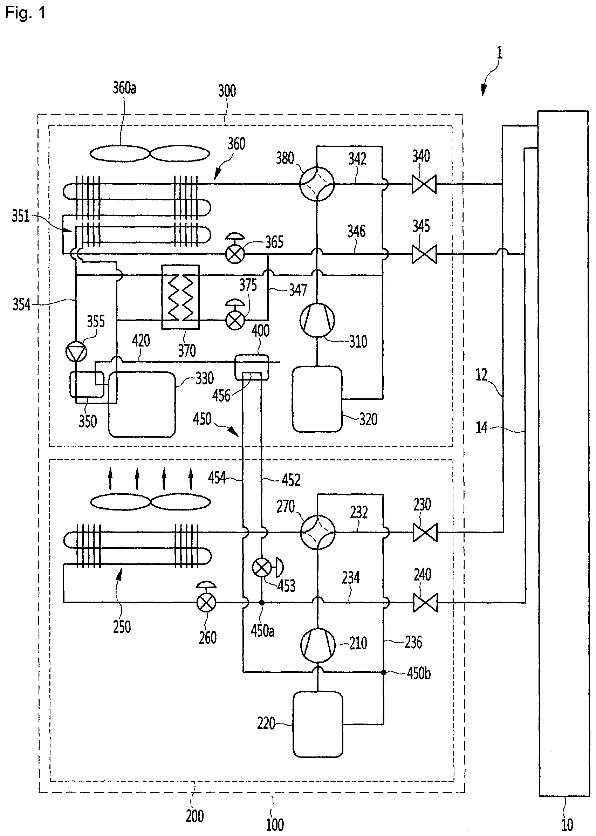

Fig. 1 is a system view of an air conditioner according to one embodiment of the present invention.

Referring to FIG.1, an air conditioner 1 includes an indoor unit 10 and an outdoor unit 100.

One or a plurality of indoor units 10 may be provided. That is, at least one or more indoor units 10 may be provided. The at least one indoor unit 10 is connected to the outdoor unit 100, and may cool or warm an interior, or may purify indoor air.

The outdoor unit 100 is connected to the indoor unit 10, and performs compressing, expanding or the like of a refrigerant so as to sufficiently exchange heat. A plurality of outdoor units 100 may be provided. Hereinafter, the embodiment in which one pair of outdoor units 100 is provided will be described.

The pair of outdoor units 100 includes an electric heat pump (EHP) outdoor unit 200 which forms an EHP using electric power, and a gas heat pump (GHP) outdoor unit 300 which forms a GHP using a gas fuel such as LPG or LNG. The outdoor units 100 further include a circulation pipe 450 which connects the EHP outdoor unit 200 with the GHP outdoor unit 300.

The EHP outdoor unit 200 is an outdoor unit which is operated in an EHP method, and includes a first compressor 210, a first accumulator 220, one pair of connection valves 230 and 240, a first outdoor heat exchanger 250, a first outdoor heat exchanger control valve 260 and a first four-way valve 270.

The first compressor 210 is an element for compressing a refrigerant, and is driven by applying a voltage. When the voltage is applied to the first compressor 210, the first compressor 210 may compress the refrigerant.

The first accumulator 220 is an element which is installed at a suction side of the first compressor 210 to supply the refrigerant to the first compressor 210. Specifically, when the refrigerant flows back in the first compressor 210, or a liquid refrigerant is suctioned into the first compressor 210, the first compressor 210 may be damaged, and thus the first accumulator 220 serves to temporarily store a mixture of oil and the refrigerant.

The pair of connection valves 230 and 240 is an element for connection with the indoor unit 10. The pair of connection valves 230 and 240 includes a first connection valve 230 which connects a discharge side pipe 232 of the first compressor 210 with a first pipe 12 of the indoor unit 10, and a second connection valve 240 which connects a connection pipe 234 of the first outdoor heat exchanger 250 with a second pipe 14 of the indoor unit 10.

It is understood that the connection pipe 234 of the first outdoor heat exchanger 250 is a pipe which connects one side of the first outdoor heat exchanger 250 with the indoor unit 10. For convenience of explanation, the connection pipe 234 of the first outdoor heat exchanger 250 will be referred to as a "first connection pipe". When the air conditioner performs a warming operation, the refrigerant condensed in the indoor unit 10 is introduced into the first outdoor heat exchanger 250 via the first connection pipe 234. In this process, the refrigerant may be decompressed in the first outdoor heat exchanger control valve 260.

The first outdoor heat exchanger 250 is an element which evaporates or condenses the refrigerant according to warming and cooling operations of the air conditioner 1. Specifically, when the air conditioner 1 performs the cooling operation, the refrigerant is condensed, and when air conditioner 1 performs the warming operation, the refrigerant is evaporated. An outdoor fan may be installed at one side of the first outdoor heat exchanger 250.

The first outdoor heat exchanger control valve 260 is an element which controls a flow of the refrigerant to the first outdoor heat exchanger 250. For example, the first outdoor heat exchanger control valve 260 may include an electronic expansion valve (EEV).

An opening degree of the first outdoor heat exchanger control valve 260 may be controlled according to whether the air conditioner 1 performs the warming or cooling operation.

For example, when the air conditioner 1 performs the cooling operation, the refrigerant condensed in the first outdoor heat exchanger 250 passes through the first outdoor heat exchanger control valve 260, and flows toward the indoor unit 10, and the opening degree of the first outdoor heat exchanger control valve 260 is controlled so that the refrigerant is not decompressed.

As another example, when the air conditioner 1 performs the warming operation, the refrigerant condensed in the indoor unit 10 passes through the first outdoor heat exchanger control valve 260, and flows toward the first outdoor heat exchanger 250, and the opening degree of the first outdoor heat exchanger control valve 260 may be controlled so that the refrigerant is decompressed.

The first four-way valve 270 is an element which switches a path of the refrigerant flowing in the EHP outdoor unit 200. When the air conditioner 1 performs the cooling operation, the first four-way valve 270 is operated to guide the refrigerant compressed in the first compressor 210 to the first outdoor heat exchanger 250. However, when the air conditioner 1 performs the warming operation, the first four-way valve 270 is operated to guide the refrigerant compressed in the first compressor 210 to the indoor unit 10.

The discharge side pipe 232 of the first compressor 210 may extend to the first connection valve 230 via the first four-way valve 270.

The GHP outdoor unit 300 is an outdoor unit which is operated in a GHP method, and includes a second compressor 310, a second accumulator 320, an engine 330, one pair of connection valves 340 and 345, a cooling water heat exchanger 350, a cooling water pump 355, a second outdoor heat exchanger 360, a second outdoor heat exchanger control valve 365, a plate type heat exchanger 370, a plate type heat exchanger control valve 375, a second four-way valve 380, an exhaust gas heat exchanger 400 and an exhaust gas heat exchanger pipe 420.

The second compressor 310 is an element for compressing the refrigerant, and is operated by driving of the engine 330 which will be described later. When a driving force is transmitted to the second compressor 310 through the engine 330, the second compressor 310 may compress the refrigerant.

The second accumulator 320 is an element which supplies the refrigerant to the second compressor 310. When the refrigerant flows back in the second compressor 310, or the liquid refrigerant is suctioned into the second compressor 310, the second compressor 310 may be damaged, and thus the second accumulator 320 serves to temporarily store the mixture of the oil and the refrigerant.

The engine 330 is an element which transmits the driving force to the second compressor 310, and is operated by burning the gas fuel such as LPG or LNG. The GHP outdoor unit 300 is operated in the GHP method by combustion gas through the engine 330.

The pair of connection valves 340 and 345 is an element for connection with the indoor unit 10. The pair of connection valves 340 and 345 includes a third connection valve 340 which connects a discharge side pipe 342 of the second compressor 310 with the first pipe 12 of the indoor unit 10, and a fourth connection valve 345 which connects a connection pipe 346 of the second outdoor heat exchanger 360 with the second pipe 14 of the indoor unit 10.

It is understood that the connection pipe 346 of the second outdoor heat exchanger 360 is a pipe which connects the second outdoor heat exchanger 360 with the indoor unit 10. For convenience of explanation, the connection pipe 346 of the second outdoor heat exchanger 360 will be referred to as a "second connection pipe".

The cooling water heat exchanger 350 is an element which is provided at one side of the engine 330 to cool the engine 330. The cooling water heat exchanger 350 serves to absorb heat of the engine 330 which is overheated according to the driving of the engine 330.

The GHP outdoor unit 300 further includes a cooling water pipe 354 which guides a flow of cooling water for cooling the engine 330. The cooling water pipe 354 is connected with the cooling water heat exchanger 350.

The cooling water pump 355 which generates a flowing force of the cooling water and a radiator 351 which cools the cooling water may be installed at the cooling water pipe 354.

The radiator 351 is provided at one side of the second outdoor heat exchanger 360, and the cooling water of the radiator 351 may exchange heat with external air by driving of an outdoor fan 360a, and may be cooled in this process.

The cooling water pump 355 is an element which provides the flowing force of the cooling water, and is installed at the cooling water pipe 354. The cooling water passed through the cooling water pump 355 may be supplied to the cooling water heat exchanger 350 via the cooling water pipe 354.

The second outdoor heat exchanger 360 is an element which evaporates or condenses the refrigerant according to the warming and cooling operations of the air conditioner 1. Specifically, when the air conditioner 1 performs the cooling operation, the refrigerant is condensed, and when air conditioner 1 performs the warming operation, the refrigerant is evaporated. The outdoor fan 360a may be installed at one side of the second outdoor heat exchanger 360.

The second outdoor heat exchanger control valve 365 is an element which controls a flow of the refrigerant to the second outdoor heat exchanger 360, and is installed at a second outdoor heat exchanger connection pipe 364. Description of the second outdoor heat exchanger control valve 365 quotes that of the first outdoor heat exchanger control valve 260.

It is understood that the plate type heat exchanger 370 is a heat exchanger in which a low pressure refrigerant exchanges heat with high temperature cooling water. The cooling water may be cooled while exchanging heat in the plate type heat exchanger 370, and the refrigerant may be evaporated in this process.

The plate type heat exchanger control valve 375 is installed at a connection pipe 347 of the plate type heat exchanger 370, and controls a flow of the refrigerant to the plate type heat exchanger 370. The connection pipe 347 of the plate type heat exchanger 370 is branched from the connection pipe 346 of the second outdoor heat exchanger 360, and extends to the plate type heat exchanger 370. The plate type heat exchanger control valve 375 may be installed in parallel with the second outdoor heat exchanger control valve 365.

The second four-way valve 380 is an element which switches a path of the refrigerant flowing in the GHP outdoor unit 300. Description of the second four-way valve 380 quotes that of the first four-way valve 270.

The exhaust gas heat exchanger 400 is an element which discharges exhaust heat of the engine 330, and is provided at a discharge side of the engine 330, and also formed to enable the exhaust gas generated after burning of a mixed fuel to be introduced therein.

The exhaust gas heat exchanger pipe 420 connects the engine 330 with the exhaust gas heat exchanger 400, and guides the exhaust gas generated from the engine 330 to the exhaust gas heat exchanger 400. At this time, the exhaust gas heat exchanger pipe 420 extends from the engine 330 to the exhaust gas heat exchanger 400 via the cooling water heat exchanger 350.

The exhaust gas heat exchanger 400 may transfer the exhaust heat of the engine 330 to the EHP outdoor unit 200. That is, the GHP outdoor unit 300 and the EHP outdoor unit 200 exchange heat with each other through the exhaust gas heat exchanger 400.

The circulation pipe 450 may connect the EHP outdoor unit 200 with the engine 330, and may guide the refrigerant of the EHP outdoor unit 200 toward the exhaust gas heat exchanger 400 of the GHP outdoor unit 300.

Specifically, a first end 450a of the circulation pipe 450 is coupled to the first connection pipe 234, and a second end 450b of the circulation pipe 450 is coupled to a connection pipe 236 of the first accumulator 220.

Here, it is understood that the first connection pipe 234 is a pipe at which the first outdoor heat exchanger control valve 260 is installed, and when the air conditioner 1 performs the cooling operation, the refrigerant condensed in the first outdoor heat exchanger 250 flows therethrough, and when the air conditioner 1 performs the warming operation, the refrigerant condensed in the indoor unit 10 flows therethrough. For example, the first connection pipe 234 may include a liquid pipe.

It is understood that the connection pipe 236 is a pipe which guides the refrigerant to the first accumulator 220, and through which the low pressure refrigerant flows. The connection pipe 236 may be referred to as a "suction pipe" which suctions the refrigerant into the first compressor 210. The suction pipe 236 extends from the other side of the first outdoor heat exchanger 250 to the first compressor 210.

The circulation pipe 450 includes a first circulation pipe 452, a second circulation pipe 454 and a third circulation pipe 456.

The first circulation pipe 452 connects the first connection pipe 234 with the exhaust gas heat exchanger 400. That is, the first circulation pipe 452 is formed to extend from the first end 450a of the circulation pipe 450 toward the exhaust gas heat exchanger 400. It is understood that the first end 450a is a part of the first circulation pipe 452.

The second circulation pipe 454 connects the connection pipe 236 of the first accumulator 220 with the exhaust gas heat exchanger 400. That is, the second circulation pipe 454 is formed to extend from the second end 450b of the circulation pipe 450 toward the exhaust gas heat exchanger 400. It is understood that the second end 450b is a part of the second circulation pipe 454.

A circulation control valve 453 may be installed at the first circulation pipe 452 or the second circulation pipe 454. The drawing illustrates that the circulation control valve 453 is installed at the first circulation pipe 452. However, the circulation control valve 453 may be installed at the second circulation pipe 454.

For example, the circulation control valve 453 may include an electronic expansion valve (EEV). The circulation control valve 453 controls the supply or flow of the refrigerant which is circulated through the circulation pipe 450.

The third circulation pipe 456 is provided inside the exhaust gas heat exchanger 400.

In brief, the first circulation pipe 452 and the second circulation pipe 454 are coupled to the exhaust gas heat exchanger 400, and the third circulation pipe 456 is connected to the first circulation pipe 452 and the second circulation pipe 454, and extends to an inside of the exhaust gas heat exchanger 400.

Due to such a configuration, the circulation pipe 450 may be formed to be branched from one point of a refrigerant pipe of the EHP outdoor unit 200, to pass through the exhaust gas heat exchanger 400, and then to be joined again to the other point of the refrigerant pipe of the EHP outdoor unit 200. Here, one point of the refrigerant pipe of the EHP outdoor unit 200 may correspond to the first end 450a of the circulation pipe 450, and the other point of the refrigerant pipe of the EHP outdoor unit 200 may correspond to the second end 450b of the circulation pipe 450.

Hereinafter, an operation of the air conditioner 1 according to the embodiment will be described in detail.

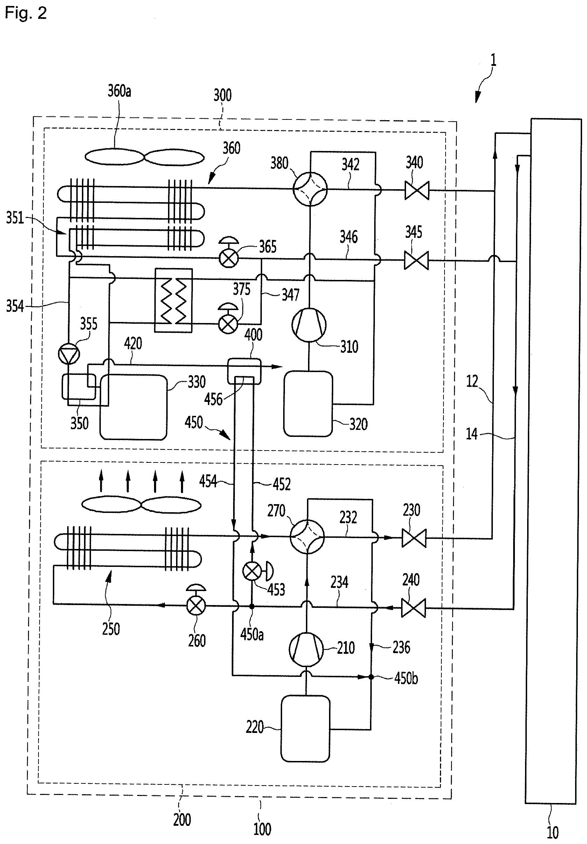

Fig. 2 is a view illustrating an operation of the air conditioner of FIG. 1.

Referring to FIG. 2, when the air conditioner 1 performs the warming operation, the EHP outdoor unit 200 forming the EHP and the GHP outdoor unit 300 forming the GHP may be combined and driven together.

First, in the EHP outdoor unit 200, a high temperature gas refrigerant compressed in the first compressor 210 is transferred to the indoor unit 10, and a low temperature liquid refrigerant is introduced from the indoor unit 10. Specifically, the high temperature gas refrigerant flows through the discharge side pipe 232 of the first compressor 210, passes through the first four-way valve 270, and is transferred to the indoor unit 10 through the first connection valve 230 and the first pipe 12.

The low temperature liquid refrigerant condensed in the indoor unit 10 is introduced into the EHP outdoor unit 200 through the second pipe 14 and the second connection valve 240. And the refrigerant introduced into the EHP outdoor unit 200 flows through the first connection pipe 234.

Meanwhile, in the GHP outdoor unit 300, the high temperature gas refrigerant compressed in the second compressor 310 is transferred to the indoor unit 10, and the low temperature liquid refrigerant is introduced from the indoor unit 10. Specifically, the high temperature gas refrigerant flows through the discharge side pipe 342 of the second compressor 310, passes through the second four-way valve 380, and is transferred to the indoor unit 10 through the third connection valve 340 and the first pipe 12. At this time, the refrigerant of the GHP outdoor unit 300 flowing through the first pipe 12 may be mixed with the refrigerant discharged from the EHP outdoor unit 200 and then may flow to the indoor unit 10.

In the EHP outdoor unit 200 again, the low temperature liquid refrigerant introduced into the EHP outdoor unit 200 is introduced into the first outdoor heat exchanger 250, and exchanges heat with the air (is evaporated).

Then, the evaporated refrigerant passes through the suction pipe 236, and is introduced into the first accumulator 220, and suctioned into the first compressor 210. Such a flow of the refrigerant is continuously performed in the EHP outdoor unit 200.

Meanwhile, at least some of the refrigerant flowing through the first connection pipe 234 is branched at the first end 450a and introduced into the circulation pipe 450. At this time, the circulation control valve 453 may be opened.

Specifically, when the circulation control valve 453 is opened, the refrigerant in the first connection pipe 234 is introduced from the first end 450a into the first circulation pipe 452, and introduced into the exhaust gas heat exchanger 400, and flows through the third circulation pipe 456. In this process, the refrigerant may be evaporated by the high temperature exhaust gas in the exhaust gas heat exchanger 400.

Meanwhile, the exhaust heat of the engine introduced into the exhaust gas heat exchanger 400 generally has a higher temperature than the atmosphere. Therefore, the low temperature liquid refrigerant flowing through the circulation pipe 450 may absorb more heat than the refrigerant heat-exchanged in the first outdoor heat exchanger 250, while exchanging heat with the exhaust gas discharged from the exhaust gas heat exchanger 400. Eventually, a temperature of the refrigerant evaporated in the exhaust gas heat exchanger 400 may be higher than that of the refrigerant evaporated in the first outdoor heat exchanger 250.

The evaporated refrigerant is introduced into the second circulation pipe 454, and introduced from the second end 450b into the suction pipe 236. That is, the refrigerant in the second circulation pipe 454 may be evaporated in the first outdoor heat exchanger 250, and may be mixed with the refrigerant flowing through the suction pipe 236.

The mixed refrigerant may pass through the suction pipe 236, may be introduced into the first accumulator 220, and may be suctioned into the first compressor 210.

As described above, when the air conditioner 1 performs the warming operation, the low temperature liquid refrigerant introduced into the EHP outdoor unit 200 may exchange heat with the first outdoor heat exchanger 250 and the exhaust gas heat exchanger 400, and may be evaporated, and thus evaporation performance may be improved. Eventually, operation performance and efficiency of the EHP outdoor unit 200 may be improved.

Also, in an aspect of the GHP outdoor unit 300, since the exhaust heat of the overheated engine is radiated through the exhaust gas heat exchanger 400, and the cooled exhaust gas may be discharged to the outside, operation performance and efficiency of the GHP outdoor unit 300 may be prevented from being degraded.

Eventually, in the embodiment, the exhaust heat which is abandoned among waste heat of the engine of the GHP outdoor unit 300 is recovered at the EHP outdoor unit 200, and thus the performance and efficiency of the EHP outdoor unit 200 may be enhanced.

Therefore, the air conditioner 1 according to the embodiment may realize the outdoor unit 100 having the improved performance and efficiency by combining the EHP outdoor unit 200 with the GHP outdoor unit 300. Therefore, the air conditioner 1 according to the embodiment may provide an air conditioner which may further improve the performance and efficiency.

According to the air conditioner having the above-described configuration, since at least some of the refrigerant flowing through the EHP outdoor unit can be transferred to the GHP outdoor unit, and can exchange heat, the operation performance and efficiency of the EHP outdoor unit can be improved.

In particular, since the refrigerant in the EHP outdoor unit is supplied to the exhaust gas heat exchanger provided at the GHP outdoor unit, and can be evaporated while exchanging heat with the exhaust gas, the evaporation performance can be improved.

Also, in the aspect of the GHP outdoor unit, since the exhaust heat of the overheated engine can be radiated through the exhaust gas heat exchanger, and the cooled exhaust gas can be discharged to the outside, the operation performance and efficiency of the GHP outdoor unit can be prevented from being degraded.

Eventually, in the embodiment, the exhaust heat which is abandoned among waste heat of the engine of the GHP outdoor unit can be recovered at the EHP outdoor unit, and thus the performance and efficiency of the EHP outdoor unit can be enhanced.

Also, the air conditioner can realize the outdoor unit having the improved performance and efficiency by combining the EHP outdoor unit with the GHP outdoor unit. Therefore, the performance and efficiency of the air conditioner can be further improved.

Although embodiments have been described with reference to a number of illustrative embodiments thereof, it should be understood that numerous other modifications and embodiments can be devised by those skilled in the art that will fall within the scope of the appended claims.

## Claims

1. An air conditioner comprising:
at least one indoor unit (10);
an EHP outdoor unit (200) connected with the at least one indoor unit (10), and having a first compressor (210) driven by using electric power and a first outdoor heat exchanger(250); and
a GHP outdoor unit (300) connected with the at least one indoor unit (10), and having an engine (330) which drives a second compressor (310) by using a combustion gas and a second outdoor heat exchanger (360), and **characterised in that** the GHP outdoor unit (300) comprises an exhaust gas heat exchanger (400) which performs heat-exchanging between refrigerant flowing through the EHP outdoor unit (200) and exhaust gas of the engine (330).

2. The air conditioner according to claim 1, further comprising a circulation pipe (450) which extends from the EHP outdoor unit (200) to the exhaust gas heat exchanger (400) and supplies the refrigerant in the EHP outdoor unit (200) to the exhaust gas heat exchanger (400).

3. The air conditioner according to claim 2, wherein the EHP outdoor unit (200) further comprises:
a first connection pipe (234) which connects the indoor unit (10) with the first outdoor heat exchanger (250), and a suction pipe (236) which guides suction of the refrigerant to the first compressor(210).

4. The air conditioner according to claim 3, wherein the circulation pipe (450) comprises a first end (450a) which is coupled to the first connection pipe (234), and a second end (450b) which is coupled to the suction pipe (236).

5. The air conditioner according to claim 3 or 4, wherein the circulation pipe (450) comprises:
a first circulation pipe (452) which is branched from the first connection pipe (234) and extends to the exhaust gas heat exchanger (400); and
a second circulation pipe (454) which extends from the exhaust gas heat exchanger (400) and is joined to a second connection pipe (346) of the second outdoor heat exchanger (360).

6. The air conditioner according to claim 5, wherein the circulation pipe (450) further comprises a third circulation pipe (456) which is connected to the first circulation pipe (452) and the second circulation pipe (454) and disposed inside the exhaust gas heat exchanger (400).

7. The air conditioner according to any one of claims 3 to 6, wherein the EHP outdoor unit (200) further comprises a first accumulator (220) which is installed at a suction side of the first compressor (210) and supplies the refrigerant to the first compressor (210), and
when the air conditioner performs a warming operation, the refrigerant condensed in the indoor unit (10) is introduced into the first outdoor heat exchanger via the first connection pipe, and the refrigerant evaporated in the first outdoor heat exchanger (250) is introduced into the first accumulator (220) via the suction pipe(236).

8. The air conditioner according to claim 7, wherein the GHP outdoor unit (300) further comprises a second accumulator (320) which is installed at a suction side of the second compressor (310) and supplies the refrigerant to the second compressor (310), and the refrigerant evaporated in the second outdoor heat exchanger (360) is introduced into the second accumulator (320).

9. The air conditioner according to any one of claims 5 to 8, further comprising a circulation control valve (453) which is installed at the first circulation pipe (452) or the second circulation pipe (454) to control a flow rate of the refrigerant supplied toward the exhaust gas heat exchanger (400).

10. The air conditioner according to claim 9, wherein the circulation control valve (453) comprises an electronic expansion valve (EEV).

11. The air conditioner according to any one of claims 3 to 10, wherein the EHP outdoor unit (200) further comprises a first connection valve (230) which connects a discharge side pipe of the first compressor (210) with a first pipe (12) of the indoor unit (10), and a second connection valve (240) which connects the first connection pipe (234) with a second pipe (14) of the indoor unit (10).

12. The air conditioner according to any one of the preceding claims, wherein the GHP outdoor unit (300) further comprises an exhaust gas heat exchanger pipe (420) which connects the engine (330) with the exhaust gas heat exchanger (400) and guides the exhaust gas generated from the engine (330) to the exhaust gas heat exchanger (400).

13. The air conditioner according to claim 12, wherein the GHP outdoor unit (300) further comprises:
a cooling water heat exchanger (350) which is provided at one side of the engine (330) to absorb heat of the engine (330) using cooling water; and
a cooling water pipe (354) which is connected with the cooling water heat exchanger (350) and guides a flow of the cooling water for cooling the engine (330).

14. The air conditioner according to claim 13, wherein the exhaust gas heat exchanger pipe (420) extends from the engine (330) to the exhaust gas heat exchanger (400) via the cooling water heat exchanger (350).

15. The air conditioner according to claim 13 or 14, further comprising:
a cooling water pump (355) which is installed at the cooling water pipe (354) and generates a flowing force of the cooling water; and
a radiator (351) which is installed at one side of the first outdoor heat exchanger (250) to exchange heat with external air and to cool the cooling water.

## Patentansprüche

1. Klimaanlage mit:
mindestens einer Inneneinheit (10);
einer EHP-Außeneinheit (200), die mit der mindestens einen Inneneinheit (10) verbunden ist und die einen ersten Verdichter (210), der mittels elektrischem Strom betrieben wird, und einen ersten Außenwärmetauscher (250) aufweist; und
einer GHP-Außeneinheit (300), die mit der mindestens einen Inneneinheit (10) verbunden ist und einen Motor (330), der einen zweiten Verdichter (310) mittels eines Verbrennungsgases antreibt, und einen zweiten Außenwärmetauscher (360) aufweist,
und **dadurch gekennzeichnet, dass**
die GHP-Außeneinheit (300) einen Abgaswärmetauscher (400) aufweist, der einen Wärmeaustausch zwischen einem Kältemittel, das durch die EHP-Außeneinheit (200) fließt, und dem Abgas des Motors (330) durchführt.

2. Klimaanlage nach Anspruch 1, die ferner eine Umwälzleitung (450) aufweist, die sich von der EHP-Außeneinheit (200) zum Abgaswärmetauscher (400) erstreckt und das Kältemittel in der EHP-Außeneinheit (200) dem Abgaswärmetauscher (400) zuführt.

3. Klimaanlage nach Anspruch 2, wobei die EHP-Außeneinheit (200) ferner aufweist:
eine erste Verbindungsleitung (234), die die Inneneinheit (10) mit dem ersten Außenwärmetauscher (250) verbindet, und eine Ansaugleitung (236), die die Ansaugung des Kältemittels zum ersten Verdichter (210) leitet.

4. Klimaanlage nach Anspruch 3, wobei die Umwälzleitung (450) ein erstes Ende (450a), das mit der ersten Verbindungsleitung (234) gekoppelt ist, und ein zweites Ende (450b) aufweist, das mit der Ansaugleitung (236) gekoppelt ist.

5. Klimaanlage nach Anspruch 3 oder 4, wobei die Umwälzleitung (450) aufweist:
eine erste Umwälzleitung (452), die von der ersten Verbindungsleitung (234) abzweigt und sich zum Abgaswärmetauscher (400) erstreckt; und
eine zweite Umwälzleitung (454) die sich vom Abgaswärmetauscher (400) erstreckt und mit einer zweiten Verbindungsleitung (346) des zweiten Außenwärmetauschers (360) verbunden ist.

6. Klimaanlage nach Anspruch 5, wobei die Umwälzleitung (450) ferner eine dritte Umwälzleitung (456) aufweist, die mit der ersten Umwälzleitung (452) und der zweiten Umwälzleitung (454) verbunden ist und innerhalb des Abgaswärmetauschers (400) angeordnet ist.

7. Klimaanlage nach einem der Ansprüche 3 bis 6, wobei die EHP-Außeneinheit (200) ferner einen ersten Akkumulator (220) aufweist, der auf einer Ansaugseite des ersten Verdichters (210) installiert ist und das Kältemittel dem ersten Verdichter (210) zuführt, und,
wenn die Klimaanlage einen Erwärmungsbetrieb durchführt, das in der Inneneinheit (10) kondensierte Kältemittel über die erste Verbindungsleitung in den ersten Außenwärmetauscher eingeleitet wird und das im ersten Außenwärmetauscher (250) verdampfte Kältemittel über die Ansaugleitung (236) in den ersten Akkumulator (220) eingeleitet wird.

8. Klimaanlage nach Anspruch 7, wobei die GHP-Außeneinheit (300) ferner einen zweiten Akkumulator (320) aufweist, der auf einer Ansaugseite des zweiten Verdichters (310) installiert ist und das Kältemittel dem zweiten Verdichter (310) zuführt, und das im zweiten Außenwärmetauscher (360) verdampfte Kältemittel in den zweiten Akkumulator (320) eingeleitet wird.

9. Klimaanlage nach einem der Ansprüche 5 bis 8, die ferner ein Umwälzsteuerventil (453) aufweist, das an der ersten Umwälzleitung (452) oder der zweiten Umwälzleitung (454) installiert ist, um eine Durchflussmenge des Kältemittels zu steuern, das zum Abgaswärmetauscher (400) zugeführt wird.

10. Klimaanlage nach Anspruch 9, wobei das Umwälzsteuerventil (453) ein elektronisches Expansionsventil (EEV) aufweist.

11. Klimaanlage nach einem der Ansprüche 3 bis 10, wobei die EHP-Außeneinheit (200) ferner ein erstes Verbindungsventil (230), das eine ausstoßseitige Leitung des ersten Verdichters (210) mit einer ersten Leitung (12) der Inneneinheit (10) verbindet, und ein zweites Verbindungsventil (240) aufweist, das die erste Verbindungsleitung (234) mit einer zweiten Leitung (14) der Inneneinheit (10) verbindet.

12. Klimaanlage nach einem der vorhergehenden Ansprüche, wobei die GHP-Außeneinheit (300) ferner eine Abgaswärmetauscherleitung (420) aufweist, die den Motor (330) mit dem Abgaswärmetauscher (400) verbindet und das vom Motor (330) erzeugte Abgas zum Abgaswärmetauscher (400) leitet.

13. Klimaanlage nach Anspruch 12, wobei die GHP-Außeneinheit (300) ferner aufweist:
einen Kühlwasserwärmetauscher (350), der auf einer Seite des Motors (330) vorgesehen ist, um Wärme des Motors (330) mittels Kühlwasser aufzunehmen; und
eine Kühlwasserleitung (354), die mit dem Kühlwasserwärmetauscher (350) verbunden ist und einen Fluss des Kühlwassers zum Kühlen des Motors (330) leitet.

14. Klimaanlage nach Anspruch 13, wobei sich die Abgaswärmetauscherleitung (420) vom Motor (330) über den Kühlwasserwärmetauscher (350) zum Abgaswärmetauscher (400) erstreckt.

15. Klimaanlage nach Anspruch 13 oder 14, die ferner aufweist:
eine Kühlwasserpumpe (355), die an der Kühlwasserleitung (354) installiert ist und eine Fließkraft des Kühlwassers erzeugt; und
einen Radiator (351), der auf einer Seite des ersten Außenwärmetauschers (250) installiert ist, um Wärme mit der Außenluft auszutauschen und das Kühlwasser zu kühlen.

## Revendications

1. Climatiseur, comprenant :
au moins une unité intérieure (10) ;
une unité extérieure EHP (200) reliée à ladite au moins une unité intérieure (10), et comportant un premier compresseur (210) entraîné par courant électrique et un premier échangeur de chaleur extérieur (250) ; et
une unité extérieure GHP (300) reliée à ladite au moins une unité intérieure (10), et pourvue d'un moteur (330) entraînant un deuxième compresseur (310) par gaz de combustion, et d'un deuxième échangeur de chaleur extérieur (360),
**caractérisé en ce que**
l'unité extérieure GHP (300) comprend un échangeur de chaleur à gaz d'échappement (400) exécutant un échange thermique entre un réfrigérant circulant dans l'unité extérieure EHP (200) et le gaz d'échappement du moteur (330).

2. Climatiseur selon la revendication 1, comprenant en outre une conduite de circulation (450) qui s'étend de l'unité extérieure EHP (200) à l'échangeur de chaleur à gaz d'échappement (400) et refoule le réfrigérant de l'unité extérieure EHP (200) vers l'échangeur de chaleur à gaz d'échappement (400).

3. Climatiseur selon la revendication 2, où l'unité extérieure EHP (200) comprend en outre :
une première conduite de connexion (234) reliant l'unité intérieure (10) au premier échangeur de chaleur extérieur (250), et une conduite d'aspiration (236) conduisant le réfrigérant aspiré vers le premier compresseur (210).

4. Climatiseur selon la revendication 3, où la conduite de circulation (450) présente une première extrémité (450a) reliée à la première conduite de connexion (234), et une deuxième extrémité (450b) reliée à la conduite d'aspiration (236).

5. Climatiseur selon la revendication 3 ou la revendication 4, où la conduite de circulation (450) comprend :
une première conduite de circulation (452) dérivée de la première conduite de connexion (234) et s'étendant vers l'échangeur de chaleur à gaz d'échappement (400) ; et
une deuxième conduite de circulation (454) s'étendant depuis l'échangeur de chaleur à gaz d'échappement (400) et raccordée à une deuxième conduite de connexion (346) du deuxième échangeur de chaleur extérieur (360).

6. Climatiseur selon la revendication 5, où la conduite de circulation (450) comprend en outre une troisième conduite de circulation (456) raccordée à la première conduite de circulation (452) et à la deuxième conduite de circulation (454) et disposée à l'intérieur de l'échangeur de chaleur à gaz d'échappement (400).

7. Climatiseur selon l'une des revendications 3 à 6, où l'unité extérieure EHP (200) comprend en outre un premier accumulateur (220) monté sur un côté aspiration du premier compresseur (210) et alimentant en réfrigérant le premier compresseur (210), et où, quand le climatiseur effectue un processus de chauffage, le réfrigérant condensé dans l'unité intérieure (10) est introduit dans le premier échangeur de chaleur extérieur via la première conduite de connexion, et le réfrigérant évaporé dans le premier échangeur de chaleur extérieur (250) est introduit dans le premier accumulateur (220) via la conduite d'aspiration (236).

8. Climatiseur selon la revendication 7, où l'unité extérieure GHP (300) comprend en outre un deuxième accumulateur (320) monté sur un côté aspiration du deuxième compresseur (310) et alimentant en réfrigérant le deuxième compresseur (310), et où le réfrigérant évaporé dans le deuxième échangeur de chaleur extérieur (360) est introduit dans le deuxième accumulateur (320).

9. Climatiseur selon l'une des revendications 5 à 8, comprenant en outre une vanne de régulation de circulation (453) montée sur la première conduite de circulation (452) ou la deuxième conduite de circulation (454) pour réguler un débit du réfrigérant refoulé vers l'échangeur de chaleur à gaz d'échappement (400).

10. Climatiseur selon la revendication 9, où la vanne de régulation de circulation (453) comprend un détendeur électronique (EEV).

11. Climatiseur selon l'une des revendications 3 à 10, où l'unité extérieure EHP (200) comprend en outre une première vanne de connexion (230) reliant une conduite côté échappement du premier compresseur (210) à une première conduite (12) de l'unité intérieure (10), et une deuxième vanne de connexion (240) reliant la première conduite de connexion (234) à une deuxième conduite (14) de l'unité intérieure (10).

12. Climatiseur selon l'une des revendications précédentes, où l'unité extérieure GHP (300) comprend en outre une conduite (420) d'échangeur de chaleur à gaz d'échappement reliant le moteur (330) à l'échangeur de chaleur à gaz d'échappement (400) et conduisant le gaz d'échappement généré par le moteur (330) vers l'échangeur de chaleur à gaz d'échappement (400).

13. Climatiseur selon la revendication 12, où l'unité extérieure GHP (300) comprend en outre :
un échangeur de chaleur à eau de refroidissement (350) prévu sur un côté du moteur (330) pour absorber la chaleur du moteur (330) au moyen d'eau de refroidissement ; et une conduite d'eau de refroidissement (354) raccordée à l'échangeur de chaleur à eau de refroidissement (350) et conduisant un flux d'eau de refroidissement destiné à refroidir le moteur (330).

14. Climatiseur selon la revendication 13, où la conduite (420) d'échangeur de chaleur à gaz d'échappement s'étend du moteur (330) à l'échangeur de chaleur à gaz d'échappement (400) via l'échangeur de chaleur à eau de refroidissement (350).

15. Climatiseur selon la revendication 13 ou la revendication 14, comprenant en outre :
une pompe d'eau de refroidissement (355) montée sur la conduite d'eau de refroidissement (354) et générant une force de courant de l'eau de refroidissement ; et
un radiateur (351) monté sur un côté du premier échangeur de chaleur extérieur (250) pour un échange thermique avec l'air extérieur et pour un refroidissement de l'eau de refroidissement.
